(19) Europäisches Patentamt

European Patent Office

Office européen des brevets

(11) **EP 0 977 345 A2**

(12) **EUROPÄISCHE PATENTANMELDUNG**

(43) Veröffentlichungstag:
02.02.2000 Patentblatt 2000/05

(51) Int. Cl.⁷: **H02K 35/04**

(21) Anmeldenummer: **99114929.5**

(22) Anmeldetag: **30.07.1999**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **31.07.1998 DE 19834672**

(71) Anmelder:
**SIEMENS AKTIENGESELLSCHAFT
80333 München (DE)**

(72) Erfinder:
• **Mock, Randolf
81739 München (DE)**
• **Kappel, Andreas
85649 Brunnthal (DE)**

(54) **Elektromagnetischer Spannungsgenerator**

(57)    Der elektromagnetische Spannungsgenerator aufweisend mindestens ein Schwingungselement (2), das an einem Träger (1) schwingfähig angebracht ist und auf dem mindestens eine Leiterschleife (3) befestigt ist, und
mindestens einen elektrischen Anschluß (4), über den ein an mindestens einer Leiterschleife (3) erzeugtes elektrisches Signal abgreifbar ist,
wobei
durch eine Bewegung des Schwingungselementes (2) in einem elektromagnetischen Feld (5) ein elektrisches Signal in der Leiterschleife (3) induzierbar ist, und die Leiterschleife (3) planar auf dem Schwingungselement (2) aufgebracht ist.

FIG 1

**Beschreibung**

Die Erfindung betrifft eine Vorrichtung und ein Verfahren zur Spannungserzeugung auf der Basis eines elektromagnetischen Wirkprinzips.

Es ist bei vielen Anwendungen wünschenswert, eine elektrische Energiequelle einzusetzen, die autonom, d.h. ohne Anschluß an ein zentrales Versorgungsnetz zur Verfügung steht. Eine solche autonome Energiequelle ist beispielsweise im Bereich der Kraftfahrzeugtechnik von großem Interesse, insbesondere wenn eine physikalische Größe gemessen und an die Steuerung des Fahrzeugs übermittelt werden soll.

Eine Möglichkeit, die notwendige Energie zu Verfügung zu stellen, ohne dazu eine Leitung verlegen zu müssen, ist die Übermittlung von Energie per Funk. Die zu diesem Zweck gesendete elektromagnetische Welle, die zudem noch eine Information für den vor Ort befindlichen Sensor enthalten kann, wird gleichgerichtet und in einem Puffer (z. B. Kondensator, Akkumulator) zwischengespeichert. Bei dieser Methode ist der vergleichsweise hohe Aufwand nachteilig, der zum Senden und Empfangen elektromagnetischer Energie notwendig ist. Zudem wird durch ein in der Nähe befindliches Metallteil (etwa eine Radaufhängung o.ä.) das elektromagnetische Feld gestört, was entweder durch eine aufwendigere Antennencharakteristik oder durch eine erhöhte Sendeleistung (schlechter Wirkungsgrad) kompensiert werden muß.

Eine weitere Möglichkeit ist der Einsatz eines piezoelektrischen Generators in einem Bereich, in dem eine Vibration genügender Stärke auftritt. Dies ist beispielsweise im Bereich einer ungefederten Masse, wie z.B. eines Rades, der Fall. Eine vibrierende Piezokeramik beispielsweise erzeugt im Takt der Vibration eine Wechselladung, die gleichgerichtet und in einem Puffer zwischengespeichert werden kann.

Eine Möglichkeit ist ferner die Verwendung eines herkömmlichen elektromagnetischen Generatorelementes, das eine Spule enthält. Wird ein solches Generatorelement, beispielsweise eine durch eine Feder beweglich gehaltene Spule, durch eine Vibration in einem inhomogenen Magnetfeld in Bewegung gesetzt, so wird in diesem eine Wechselspannung mit einer Frequenz der Vibration erzeugt. Das Problem bei einer solchen Anordnung besteht darin, eine geeignete Halterung für einen solchen Generator zu finden. Es ist beispielsweise sinnvoll, die Spule an einer Blattfeder aufzuhängen. Eine Magnetspule, die gegebenenfalls mehrere Wicklungen aus Draht aufweist, ist aber nachteilig, weil ihr Bauvolumen relative groß und ihre Fertigung vergleichsweise kostenaufwendig ist.

Die Aufgabe der vorliegenden Erfindung ist es, eine Möglichkeit zur autonomen elektrischen Versorgung zur Verfügung zu stellen, die zuverlässig und kompakt arbeitet.

Diese Aufgabe wird durch die Merkmale der Ansprüche 1, 17 bzw. 19 gelöst.

Die Idee der Erfindung besteht im wesentlichen darin, ein planares, schwingungsfähiges Leitersystem in ein elektromagnetisches Feld zu bringen und durch von außen aufgebrachte Vibrationen in dem Leitersystem ein elektrisches Signal zu induzieren.

Dazu wird mindestens eine Leiterschleife auf mindestens ein Schwingungselement aufgebracht, wobei das Schwingungselement an einem Träger befestigt ist und sich in einem elektromagnetischen Feld befindet. Eine Vibration des Trägers, beispielsweise bei einer Montage an einem Rad eines Fahrzeuges, wird an das Schwingungselement weitergeleitet. Die Leiterschleife ist auf dem Schwingungselement planar aufgebracht, beispielsweise in Dünnschicht-Technologie, so daß sie die Schwingung des Schwingungselementes mitmacht. Dabei ändert sich zeitlich der magnetische Fluß $\Phi$ durch die Leiterschleife der Fläche A($\Phi = \underline{B} \cdot \underline{A}$, $\underline{B}$:Magnetfeld) so daß in der Leiterschleife eine Spannung der Größe

$$U_{ind} = -n\frac{d(\underline{B} \cdot \underline{A})}{dt}, \text{ n: Windungszahl}$$

induziert wird.

Beispielsweise ist ein geeignetes Schwingungselement ein Balken, der an einem Träger einseitig fest eingespannt ist. Die Verwendung eines Balkens ist vorteilhaft, weil seine Schwingungscharakteristik gut untersucht und damit vorherbestimmbar ist.

Das Material des Schwingungselementes ist nicht festgelegt, wobei ein im Anwendungsbereich sich elastisch verhaltender Werkstoff bevorzugt ist. Es kann etwa keramisches Material (z.B. hohe Temperaturbeständigkeit), Halbleiter-Material (z.B. gut bearbeitbar, Elektronik gut integrierbar) und Kunststoff (z.B. preiswert, leicht bearbeitbar) verwendet werden.

An einem Träger sind zur höheren Energieausbeute vorzugsweise mehrere Schwingungselemente angebracht. Diese sind günstigerweise unterschiedlich dimensioniert, so daß mehrere Maxima des Vibrationsspektrums abgedeckt werden.
Der Einsatz mehrerer Windungen pro Schwingungselement ist aufgrund einer verbesserten Energieausbeute vorteilhaft.

Statt eines einseitig eingespannten kann auch ein zweiseitig eingespannter Balken verwendet werden. Auch kann ein anders geformtes Schwingungselement, wie beispielsweise ein Stab oder eine Membran, eingesetzt werden. Auch kann eine Massebelegung eines Schwingungselementes vorteilhaft sein.

Ein denkbarer Spannungsgenerator besteht aus einem offenen, kastenförmigen Träger, an dessen sich gegenüberliegenden Innenseiten jeweils mehrere, verschieden lange Schwingungselelmente nebeneinander angebracht sind. Die Schwingungselemente sind der Größe nach geordnet, und zwar so, daß zwei sich jeweils gegenüberliegende Schwingungselemente eine konstante addierte Länge besitzen. Die Länge eines Schwingungselementes ist jeweils auf ein Maximum im Vibrationsspektrum des Trägers abgestimmt. Auf jedem Schwingungselement sind mehrere Windungen aufgebracht.

Ein solcher Spannungsgenerator ist kompakt, leistungsfähig und deckt ein weites Vibrationsspektrum ab

In den folgenden Ausführungsbeispielen wird der elektromagnetische Spannungsgenerator schematisch näher dargestellt.

Figur 1 zeigt das Wirkprinzip eines elektromagnetischen Spannungsgenerators,
Figur 2 zeigt eine mögliche Anordnung des elektromagnetischen Spannungsgenerators,
Figur 3 zeigt eine weitere Ausgestaltungsmöglichkeit des elektromagnetischen Spannungsgenerators.

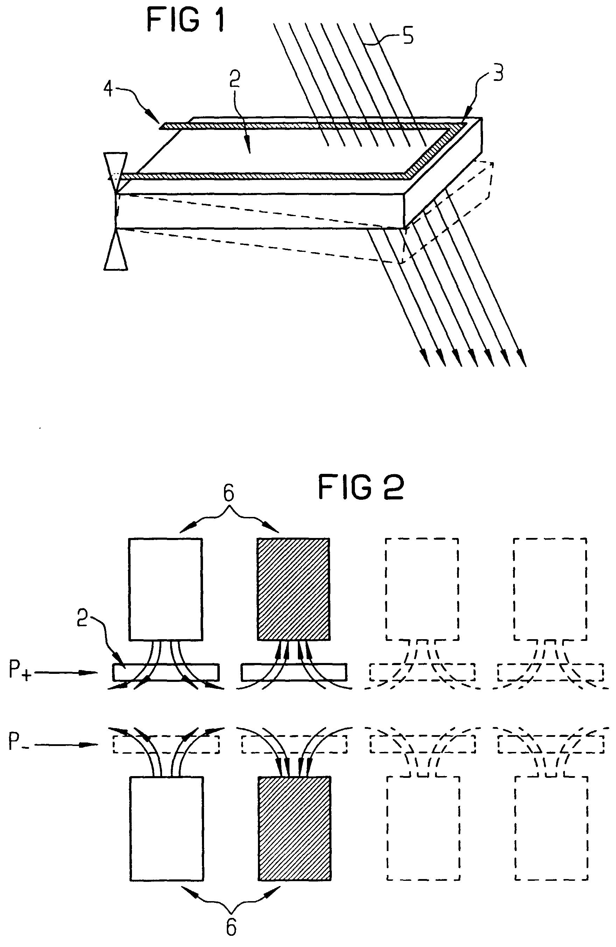

Figur 1 zeigt in Schrägansicht ein nach oben gebogenes Schwingungselement 2, auf dem eine Leiterschleife 3 planar aufgebracht ist. Das Schwingungselement 2 ist fest eingespannt, was durch die Dreiecke symbolisiert ist, der Träger 1 ist zur besseren Darstellung nicht abgebildet. Das Schwingungselement 2 wird von einem elektromagnetischen Feld 5 durchflossen. Gestrichelt eingezeichnet ist eine weitere Position des Schwingungselementes 2, wenn es nach unten gebogen ist.

Bei Einwirkung einer äußeren Vibration auf den Träger 1 wird Schwingungselement im elektromagnetischen Feld 5 bewegt. Diese Bewegung hat hauptsächlich die folgenden Ursachen:

• der Träger 1 wird im elektromagnetischen Feld 5 verkippt,
• das Schwingungselement 2 wird im Takt der Schwingung mechanisch verbogen,
• das elektromagnetische Feld 5 besitzt gegebenenfalls am neuen Ort eine andere Stärke bzw. Richtung.

Durch diese Vibration wird eine Wechselspannung $U_{ind}$ in der Leiterschleife 3 induziert, die an den elektrischen Anschlüssen 4 abgegriffen wird.

Damit eine möglichst große Auslenkung des Schwingungselementes 2, und damit eine maximale Flußänderung durch die Leiterschleife 3, erreicht wird, ist das Schwingungselement 2 so bemessen, daß seine erste Biegeresonanz der Frequenz der Vibration entspricht. Die Effizienz des elektromagnetischen Spannungsgenerators wird weiterhin dadurch gesteigert, daß die Leiterschleife 3 ein Teil eines LC-Kreises ist, dessen Resonanzfrequenz ebenfalls auf die Frequenz der Vibration abgestimmt ist (ohne Abbildung). Der hierzu benötigte Kondensator kann z. B. als SMD-("Surface Mounted Device", d.h. an der Oberfläche aufgebrachtes) Bauteil auf dem Träger aufgebaut, oder auch ein Teil einer externen Beschaltungen sein.

In diesem Ausführungsbeispiel ist das Schwingungselement 2 als ein rechteckiger Balken ausgeführt. Es ist vorteilhaft, wenn die Leiterschleife 3 die von ihr belegte Fläche maximal ausfüllt, weil dadurch eine Flußänderung des elektromagnetischen Feldes 5 maximal wird. Daher ist hier die Leiterschleife 3 rechteckig ausgeführt.

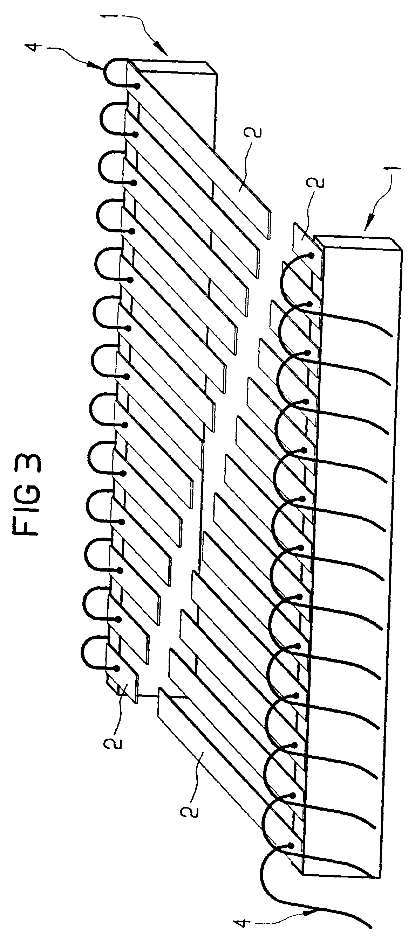

In Figur 2 ist in Seitenansicht eine Anordnung mehrerer Schwingungselemente 2 in einem Magnetfeld aufgezeichnet.

Zur Erlangung einer möglichst hohen induzierten Spannung $U_{ind}$ muß das Magnetfeld am Ort der Leiterschleife sehr hoch und möglichst stark inhomogen sein. Dazu werden Magnete 6 gleicher Polarität (hellgrau bzw. dunkelgrau gekennzeichnet) oberhalb und unterhalb des Schwingungselementes 2 angebracht. Dabei muß aber das Schwingungselement 2 nicht vollständig von den Magneten 6 überdeckt sein. Es können beliebig viele Schwingungselemente 2 mit ihren Magneten 6 nebeneinander angeordnet sein (schraffiert angedeutet).

Die Polarität zweier nebeneinander angebrachter Magnete 6 ist jeweils unterschiedlich. Dadurch wird im Bereich der Schwingungsebene eines Schwingungselementes 2 ein stark inhomogenes Magnetfeld erzeugt, dessen Feldlinien in Bild 2 durch die Pfeile angedeutet sind. Die starke Änderung des magnetischen Flusses durch eine Leiterschleife 3 wird besonders deutlich bei dem Vergleich des oberen Umkehrpunktes P+ des Schwingungselementes 2 mit der Position des unteren Umkehrpunktes P- des Schwingungselementes 2 (schraffiert dargestellt). Der Magnet 6 ist vorteilhafterweise ein Permanentmagnet, vorzugsweise aus Samarium-Kobalt, wodurch eine hohe magnetische Feldstärke erzielbar ist.

In Bild 3 wird in Schrägansicht eine weitere Ausführung eines elektromagnetischen Spannungsgenerators gezeigt. Hierbei besteht der Träger 1 aus mindestens zwei parallelen, sich gegenüberliegenden Teilen, auf denen jeweils mehrere Schwingungselemente 2 aufgebracht sind. Die Schwingungselemente 2 sind hier in Form dünner Balken bzw. Zungen ausgebildet und sind auf jeweils einer Seite des Trägers 1 entsprechend ihrer Länge geordnet. Die Schwingungselemente 2 auf den beiden Seiten des Trägers 1 sind so angeordnet, daß sich jeweils zwei Schwingungselemente 2 gegenüberstehen, wobei die addierte Länge dieser beiden Schwingungselemente 2 konstant ist. Über einen, hier symbolisch eingezeichneten, elektrischen Anschluß 4 ist die im Schwingungselement 2 induzierte Spannungen $U_{ind}$ abgreifbar. Auf eine Einzeichnung eines Magneten 6 wurde aus Gründen der Übersichtlichkeit verzichtet.

In dieser Ausführungsform sind die einzelnen Schwingungselemente 2 so abgestimmt, daß sie die Intensitätsmaxima des vom Träger 1 übertragenen Vibrationsspektrums abdecken. Dadurch wird etwa erreicht, daß bei einem Fahrzeug auch bei einem Betriebszustand mit stark veränderlicher Drehzahl bzw. Vibration (etwa bei wechselndem Fahrbahnbelag oder Stop-and-Go-Verkehr) eine gute Energieausbeute erreicht wird.

Die Detailabstimmung dieses elektromagnetischen Generators kann mittels einer physikalischen Simulation vorgenommen werden. Dies gilt vor allem mit Blick auf die magnetische Feldverteilung im Schwingungsbereich des Schwingungselementes 2.

Die Verwendung eines balkenförmigen Schwingungselementes 2 ist dabei vorteilhaft, weil die Schwingungscharakteristik eines eingespannten Balkens sehr gut bestimmbar ist, beispielsweise mit Hilfe der Biegetheorie. Zudem ist die Balkengeometrie vergleichsweise einfach herstellbar.

Weiterhin vorteilhaft ist, daß Balken auch in einer mikromechanischen Größenordnung, beispielsweise mit Hilfe der Siliziumtechnologie, herstellbar sind. Zwar ist im mikromechanischen Bereich die Schwingungscharakteristik eines Balkens aufgrund nicht mehr vernachlässigbarer Größeneffekte, stärkerer Einwirkung von Herstellungstoleranzen sowie herstellungsbedingter Abweichungen von der idealen Balkenform komplexer als im makromechanischen Bereich. Dennoch kann die Schwingung eines mikromechanischen Schwingungselementes 2 mittels eines Simulationsprogramms, beispielsweise eines Finit-Elemente-Programms (FEM) in guter Näherung berechnet werden. Ein Vorteil einer Verwendung der Silizium-Technologie ist die mögliche Integration einer elektronischen Schaltung, z.B. eines LC-Kreises oder einer Auswerteelektronik, am Träger 1.

Die Aufbringung einer planaren Leiterschleife 3 auf ein Schwingungselement 2 ist vergleichsweise einfach zu bewerkstelligen. Dies kann beispielsweise bei einem keramischen Schwingungselement 2 mittels eines Siebdruckverfahrens geschehen; bei einem aus einer Platine hergestellten Schwingungselement 2 beispielsweise mittels einer Ätztechnik. Auch kann die Leiterschleife 3 auf eine Folie, z. B. Kapton, aufgebracht werden und diese Folie dann auf ein festes Substrat (Metallblech, Kunststoff) aufgebracht werden, beispielsweise mittels einer Verklebetechnik. Durch eine entsprechende Strukturierungsmaßnahme läßt sich mittels einer planaren Technik auch eine Leiterschleife 3 mit mehreren Windungen herstellen, so daß sich die induzierte Spannung $U_{ind}$ gemäß der oben beschriebenen Gleichung mit der Windungszahl erhöht. Eine solche Strukturierungsmaßnahme kann beispielsweise bei einem Keramiksubstrat ein Mehrfachsiebdruck mit verschiedenen Materialien sein oder auch eine Aufdampf- und Sputtertechnik. Bei einer Folie oder Platine kann eine mehrlagige Verklebung oder eine Mehrlagentechnik mit entsprechender Durchkontaktierung verwendet werden.

Die Form der Leiterschleife 3 kann beliebig sein, beispielsweise kreisförmig, elliptisch oder rechteckig. Die rechteckige Form der Leiterschleife 3 ist bei Verwendung auf einem Balken insofern vorteilhaft, als daß sie die maximale Fläche umschließt, auf der sie aufgebracht ist.

Der Balken kann einseitig oder beidseitig eingespannt sein. Als Schwingungselement 2 kommen aber auch alle anderen schwingfähigen Systeme in Frage, beispielsweise ein kreisförmiges oder ein elliptisches, sich wie eine Membran verhaltendes Schwingungselement 2.

**Patentansprüche**

1. Spannungsgenerator, aufweisend

   - mindestens ein Schwingungselement (2), das an einem Träger (1) einseitig und freischwingend angebracht ist und auf dem mindestens eine Leiterschleife (3) befestigt ist,
   - mindestens einen elektrischen Anschluß (4), über den ein an mindestens einer Leiterschleife (3) erzeugtes elektrisches Signal abgreifbar ist,
   wobei
   - durch eine Bewegung des Schwingungselementes (2) in einem magnetischen Feld (5) ein elektrisches Signal in der Leiterschleife (3) induzierbar ist,
   die Leiterschleife (3) planar auf dem Schwingungselement (2) aufgebracht ist.

2. Vorrichtung nach Anspruch 1, bei der die Leiterschleife (3) mehrere Windungen enthält.

3. Vorrichtung nach einem der vorhergehenden Ansprüche, bei der mehrere Schwingungselemente (2) am Träger (1) befestigt sind.

4. Vorrichtung nach einem der vorhergehenden Ansprüche, bei der die Schwingungselemente (2) unterschiedliche Abmessungen besitzen.

5. Vorrichtung nach einem der vorhergehenden Ansprüche, bei der mindestens eine Leiterschleife (3) ein Teil eines elektrischen Schwingkreises ist.

6. Vorrichtung nach einem der vorhergehenden Ansprüche, bei der das Schwingungselement (2) balkenförmig ist.

7. Vorrichtung Anspruch 6, bei der am Träger (1) mehrere balkenförmige Schwingungselemente (2) unterschiedlicher Länge angebracht sind.

8. Vorrichtung nach Anspruch 6 oder 7, bei der die Leiterschleife (3) eine rechteckige Form besitzt.

9. Vorrichtung nach einem der Ansprüche 6 bis 8, bei der an gegenüberliegenden Seiten des Trägers (1) jeweils mindestens zwei Schwingungselemente (2) nebeneinander angebracht sind, wobei die addierte Länge zweier sich gegenüberstehender Schwingungselemente (2) gleich ist.

10. Vorrichtung nach Anspruch 9, bei der die an einer Seite des Trägers (1) angebrachten Schwingungselemente (2)

- jeweils eine unterschiedliche Länge besitzen,
- längenmäßig geordnet nebeneinander angebracht sind.

11. Vorrichtung nach einem der vorhergehenden Ansprüche, bei der ein Mittel zur Erzeugung eines magnetischen Feldes (5) mit dem Träger (1) verbunden ist, so daß sich mindestens ein Schwingungselement (2) innerhalb dieses magnetischen Feldes (5) befindet.

12. Vorrichtung nach Anspruch 11, bei der das Mittel zur Erzeugung des magnetischen Feldes (5) mindestens ein Permanentmagnet (6) ist,

13. Vorrichtung nach Anspruch 12, bei der mindestens ein Permanentmagnet (6) aus Samarium-Kobalt besteht.

14. Vorrichtung nach einem der vorhergehenden Ansprüche, bei der das magnetische Feld (5) im Bereich der Schwingungsebene des Schwingungselementes (2) mindestens teilweise inhomogen ist.

15. Vorrichtung nach Anspruch 14, bei der mindestens zwei Schwingungselemente (5) nebeneinander angebracht sind, wobei

- die Schwingungsebene eines Schwingungselementes (5) mindestens teilweise von Permanentmagneten (6) gleicher Polarität begrenzt wird,
- die Schwingungsebene eines dazu benachbarten Schwingungselementes (2) mindestens teilweise von Permanentmagneten (6) mit dazu entgegengesetzter Polarität begrenzt wird.

16. Vorrichtung nach einem der vorhergehenden Ansprüche, bei der den elektrischen Anschlüssen (4) ein Gleichrichter nachgeschaltet ist.

17. Verwendung der Vorrichtung nach einem der vorhergehenden Ansprüche in einem Kraftfahrzeug.

18. Verwendung der Vorrichtung nach Anspruch 17, im Bereich einer ungefederten Masse.

19. Verfahren zur Erzeugung einer Spannung, bei dem

- mindestens ein Schwingungselement (2), das an mindestens einem Träger (1) einseitig und freischwingend angebracht ist, durch eine Bewegung des Trägers (1) zu einer Schwingung angeregt wird,
- auf dem Schwingungselement (2) mindestens eine Leiterschleife (3) in planarer Weise befestigt ist, wobei
- durch die Schwingung des Schwingungselementes (2) in einem magnetischen Feld (5) der magnetische Fluß durch die Leiterschleife (3) geändert wird, so daß ein elektrisches Signal in der Leiterschleife (3) induziert wird,
- mittels mindestens eines elektrischen Anschlusses (4) das an mindestens einer Leiterschleife (3) induzierte elektrische Signal abgegriffen wird.

20. Verfahren nach Anspruch 19, bei dem das Schwingungselement (2) in einem inhomogenen magnetischen Feld (5) bewegt wird.

21. Verfahren nach Anspruch 19 oder 20, bei dem die erste mechanische Eigenfrequenz des Schwingungselementes (2) auf eine Vibrationsfrequenz des Trägers (1) abgestimmt ist.

22. Verfahren nach einem der Ansprüche 19 bis 21, bei dem die Leiterschleife (3) als Teil eines elektrischen Schwingkreises geschaltet wird, dessen Resonanzfrequenz auf eine Vibrationsfrequenz des Trägers (1) abgestimmt ist.

23. Verfahren nach einem der Ansprüche 19 bis 22, bei dem mehrere Schwingungselemente (2) und die dazugehörigen Schwingkreise so abgestimmt werden, daß sie mit jeweils einem typischen Vibrationsmaximum des Vibrationsspektrums des Trägers (1) übereinstimmen.

24. Verfahren nach einem der Ansprüche 19 bis 23, bei dem die Leiterschleife (3) mittels Siebdruck auf einen keramikähnlichen Träger (1) aufgebracht wird.

25. Verfahren nach einem der Ansprüche 19 bis 24, bei dem die Bewegung des Schwingungselementes (2) sich zumindest annähernd als Balken beschreiben läßt.

# FIG 1

# FIG 2

# FIG 3

EP 0 977 345 A2